# EUROPEAN PATENT APPLICATION

(11) **EP 4 138 398 A1**
(43) Date of publication of application: **22.02.2023**
(21) Application number: 20936677.2
(22) Date of filing: 21.05.2020
(51) Int. Cl.: H04N 21/45, H04N 21/482

(54) **METHOD, SYSTEM AND COMPUTER PROGRAMMES FOR THE GENERATION OF LISTS OF PERSONALISED MULTIMEDIA CONTENT AT A MULTIMEDIA INTERFACE**

(71) Applicant: Telefonica Digital España, S.L.U., 28013 Madrid (ES)
(72) Inventor: ANTOLIN RAFAEL, Pablo, 28013 Madrid (ES); DOMINGUEZ TORRE, Juan Luis, 28013 Madrid (ES); SÁNCHEZ GARCÍA, José Miguel, 28013 Madrid (ES); GARCIA BENET, Benjamín, 28013 Madrid (ES); DELGADO GARCÍA, Iván, 28013 Madrid (ES)
(74) Representative: Carlos Hernando, Borja
(86) International application number: PCT/ES2020/070334
(87) International publication number: WO 2021/234189

(57) **Abstract**

A method, system and computer programmes are disclosed for the generation of lists of personalised multimedia content at a multimedia interface. The method comprises generating a first multimedia content guide including a plurality of blocks with multimedia content being broadcast at a particular time, where the plurality of blocks are distinguished by dial and are arranged according to the preference of a user, where said preference has been actively selected by the user and/or refers to a viewing pattern of the multimedia content most viewed by the user during a pre-set time; generating, via the multimedia interface, a second multimedia content guide including a plurality of blocks with multimedia content related to a multimedia content broadcast at said particular time; displaying at the multimedia interface the first and second multimedia content guides generated.

## Description

### Technical field

The present invention concerns a method, system and computer programmes for the generation of lists or guides of personalised multimedia content at a multimedia interface.

### Background of the invention

Traditional television and video consumption habits have been transformed to a large extent by the emergence of digital streaming video consumption solutions that have moved the user from a *lean-back* to a *lean-forward* consumption behaviour. This effort is mainly carried out in the browsing and selection of the most appropriate multimedia content to be consumed according to the preferences of each individual.

The on-demand-isation of live content aims to adapt this new context to the traditional TV consumption experience based on channel up, channel down control of all service broadcasts.

As references closest to the present invention, design solutions can be considered that are directly performed on the consumption environment, offering a diversity of functions. In OTT environments, the following can be considered:
- Binge-watching of the Netflix *streaming* platform: At the end of the episode playback, the player disappears and one or two thumbnails of multimedia contents appear; a first thumbnail for the "Next episode" case and the second content, a related multimedia content. The multimedia content in playback is minimised by occupying the upper right corner and the background is occupied with an editorial image or *frame* relevant to the multimedia content.
- X-RAY of the Amazon Prime Video platform: The player's time line is enriched with thumbnails containing the actors' profiles or the programme's soundtrack.

The previous solutions do not propose the integration of control elements with an immediate scanning view of LIVE content. For example, Netflix's *binge-watching* only proposes to link contents once the same have finished playing in its entirety. Amazon's X-Ray incorporates elements related to the multimedia content, not multimedia content per se: cast profiles, music of the soundtrack, etc.

### Disclosure of the invention

To that end, according to a first aspect, exemplary embodiments of the present invention provide a method for the generation of lists of personalised multimedia content at a multimedia interface, the method comprising generating, by means of a processor, a first multimedia content guide including a plurality of blocks with multimedia content being broadcast at a particular time, the plurality of blocks being distinguished by dial and arranged according to the preference of a user, where said preference has been actively selected by the user and/or refers to a viewing pattern of the multimedia content most viewed by the user during a pre-set time, for example during 5 days, 1 week, 2 weeks, 1 month, etc.

Further, the method comprises the generation of a second multimedia content guide including a plurality of blocks with multimedia contents related to a multimedia content being broadcast at said particular time via the multimedia interface, and displaying at the multimedia interface, by means of a processor, the first and second multimedia content guides generated.

In an exemplary embodiment, the second guide is generated using one or more artificial intelligence and/or machine learning algorithms.

In an exemplary embodiment, the method further comprises calculating a degree of similarity between the multimedia content broadcast at said particular time and a set of multimedia contents stored in a database based on a weighted sharing of metadata of the multimedia content.

Also, in some exemplary embodiments the method may further calculate a correction factor based on a consumption profile of the multimedia content and including the blocks in the second guide arranged from the highest to the lowest correction factor.

In an exemplary embodiment, the multimedia contents of the first guide are displayed arranged from highest to lowest viewing.

In an exemplary embodiment, said viewing pattern takes into account a time of day and/or days of the week in which the user views the multimedia content.

Likewise, the method may further determine, using a recommendation engine, that the user is viewing a particular multimedia content based on metadata associated with said particular multimedia content; and displaying said particular multimedia content in a first block of the first multimedia content guide.

In an exemplary embodiment, the first multimedia content guide is displayed above the second multimedia content guide.

In an exemplary embodiment, the number of multimedia contents included in each guide is configurable.

Other embodiments of the invention disclosed in the present document also include a system for the generation of lists of personalised multimedia content at a multimedia interface and computer programme products for performing the steps and operations of the method proposed in the first aspect of the invention. More particularly, a computer programme product is an embodiment which has a computer-readable medium including computer programme instructions coded therein which, when executed in at least one processor of a computer system, cause the processor to perform the operations indicated in the present document as embodiments of the invention.

The present invention is based on four interrelated pillars that take advantage of technologies already available on the market:
- Construction of a user interface that works in conjunction with a simplified remote control (with a substantial reduction of buttons compared to a universal remote control).
- Immediate scanning of channels/content. In a channel tuning situation there is a need to advance the scanning of other channels or third party providers (at least the most consumed by the user), even if it means a change of TV model.
- All channels must be able to offer broadcast control. The aim is to offer in a very obvious way broadcast control tools, on-demand-ising the broadcast.
- Each channel must extend the possibilities of accessing content from various sources. Offering broadcast related content, *binge watch* series tracking and access to third party providers.

Some of the advantages provided by the invention are:
Cohesion: both in the way content is treated (considering LIVE content as VOD content, giving it the same metadata relevance...) and in the interactions existing in the service.
Consistency: VoD and Live players are unified into a single experience.
Simplicity: extra content information is reduced in discovery environments, all the complete and developed information being located in the content detail file.
Componentisation: components are used that will be present in both the content discovery and consumption phases, the collections.
Retention: it favours user retention, as it is a design that links content to content from the environment of the consumption thereof, thus avoiding switching between different video services.

### Brief description of the drawings

The foregoing and other features and advantages will be more fully understood from the following detailed description, by way of mere illustration and not limitation, of some exemplary embodiments with reference to the attached drawings, wherein:
Figure 1 schematically illustrates an exemplary embodiment of the multimedia interface proposed by the present invention.
Figs. 2A - 2E illustrate an example of the page layout, or *wireframe,* of the flow to go from one guide to another, according to an exemplary embodiment of the present invention.

### Detailed description of the invention and exemplary embodiments

The present invention provides a method, system and computer programmes for the generation of lists of personalised multimedia content at a multimedia interface. The invention can work in two distinguished areas, a main page, or Home, and a channel switching (mini-guide) when the user is already consuming a specific channel.

It must be indicated that the first and second multimedia content guides of the present invention, as will be detailed below, are generated during the second scope, i.e. during channel switching when consuming a specific channel.

The evolution of Home is part of the on-demand-isation strategy and aims to offer the user, on the first screen of the service, a showcase of multimedia content that maximises conversion to consumption and engagement, with an initial focus on TV multimedia content, and with the possibility of discovering multimedia content both with horizontal (from the same category) or vertical (from different categories) browsing.

Likewise, the invention allows the control of the multimedia content and also facilitates the discovery of all the multimedia content available at the moment of consumption on TV, offering a preview of the different multimedia content being broadcast, and at the same time opens the possibility to extend this new experience to access on-demand-ised multimedia content that were not discoverable until now from a classic experience of consumption of linear channels.

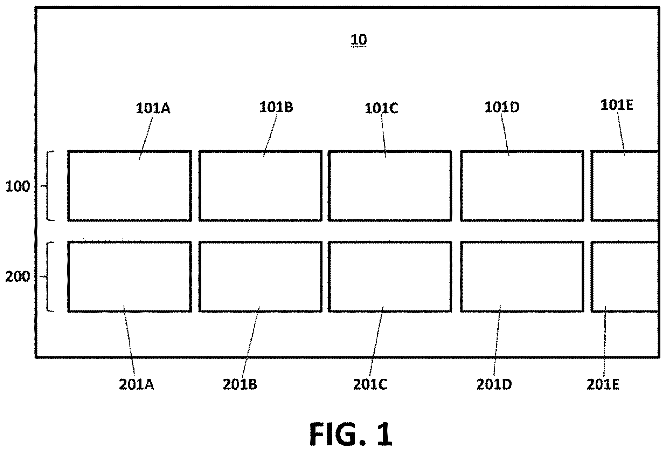

To this end, the invention provides a novel concept of multimedia content guides that will be generated, by means of one or more processors of a computer system, and subsequently displayed on the multimedia interface 10 (see Fig. 1). The novel concept of the first multimedia content guide 100, or "Now on TV" strip, is built on the concept of a circular carousel of multimedia content being broadcast. The first multimedia content guide 100 includes a set of blocks 101A...101E with all the multimedia content being broadcast at a particular time, i.e. live content, from all channels in the user's grid, including virtual channels and non-contracted channels. Moreover, the second multimedia content guide 200 includes a set of blocks 201A...201E with multimedia content related to a particular multimedia content being broadcast at said particular time.

Thus, the present invention, which can be considered a novel TV player, is intended to communicate to the user that he can control the broadcasting of the linear multimedia content. These functionalities were until recently limited to video-on-demand multimedia content. The invention comprises actions for controlling the broadcast and accessing the functionality associated with the multimedia content or its channel.

The options of the invention are associated with the capabilities and status of each television programme being broadcast and the channel to which it belongs, which are indicated as part of the EPG file or can be configured in the system/platform. In this way, at the programme and linear channel level in the system it is configured whether the multimedia content can be stopped and/or watched from the start if it is already in progress, as well as the link to the area of multimedia content of said channel already broadcast, for which it is configured. If the user is enjoying the multimedia content in delayed mode, he/she is offered the option to return to live mode. On a technical level, while in the case of live consumption the *streaming* of that linear channel comes from IPTV, CATV or OTT headends (depending on the device), when switching to deferred consumption, use is made of commercial VSPP capabilities and/or a CDN.

In addition, multimedia content recording actions are enabled (if there are rights for doing so), as well as audio and subtitle language selection and other management actions (viewing details of the multimedia content being broadcast or being able to mark the channel as a favourite, among others). The recording of multimedia content can be local, in the case of STBs incorporating a storage, or network hard disk, again making use of commercial VSPP capabilities.

In an exemplary embodiment, the generation of the first multimedia content guide 100 is constructed based on two elements. In the first element, shortcuts to the user's usual channels are considered. In a second element, all the channels of the guide are considered.

Likewise, the first element can, in turn, be constructed by means of at least one of the following two sub-elements:
∘ Favourite channels: the user can create his/her list of favourite channels. If the user has created it, the first multimedia contents displayed in the first multimedia content guide 100 correspond to the multimedia contents belonging to this group. These multimedia contents can be marked with the "heart" icon, for example.
∘ Most viewed channels: multimedia contents of the linear channels most viewed by the user are displayed. For this purpose, the system saves information about the channels that the user is viewing (a minimum time of continuous viewing of the channel is required for it to be considered as consumption) and updates, in real time, the list of the most viewed channels in the last few days, for example the last 5 or 7 days (configurable value), arranged from highest to lowest consumption. If any of these channels already appears as a favourite, the next in the list is displayed until the number of most viewed channels to be displayed is reached (also configurable).

The second item shows all the multimedia contents being broadcast for all the channels in the grid, preferably arranged by channel/dial number, repeating them if the channel was listed as favourite and/or most viewed.

In some exemplary embodiments, the first element can be modified according to the following courses of action:
- Explicit profiles: nowadays the consumption of linear channels does not discriminate who is sitting in front of the screen. In a device such as a set-top box, which is typically installed in the living room of the home, video and TV consumption is sometimes individual, sometimes shared. By including explicit profiles it is possible to indicate to the system who is in front of the TV (the family, the father, the mother, the adolescent boy, the 3-year-old girl). This allows the list of most viewed channels to vary according to the profile and thus allows shortcuts to be more tailored to the expectations of the user.
- Implicit time profiles: this course of action considers that consumption in the mornings differs, in terms of multimedia content and channels, from consumption that may take place in the afternoons or evenings, and that consumption is different on a daily day than on a weekend day. It can be complemented with the explicit profiles and in some cases it can replace explicit profiles, given that the routines of the household usually align the time slot (in the morning the father is watching news, then the child is watching cartoons or in the evening the couple watches a series). Using this information it is possible to provide in each case the most appropriate channel list.
- Personal recommendations: to illustrate this case, we can consider the situation of soccer, where different channels broadcast the matches and, moreover, the matches take place throughout the weekend, including Friday (or any other day). When the recommendation engine based on machine learning and artificial intelligence algorithms determines that the user views their team's matches (for which metadata associated with the content in which said team is identified is required), it will be able to display in the first block 101A of the first multimedia content guide 100 the channel on which their team's match is being broadcast, regardless of whether said match is broadcast on a channel that in general terms does not belong to the most viewed channels.
- Editorialisation: in the face of events with a large audience (sporting events, premieres, ceremonies, etc.), it is possible to alter the algorithm to place in the first positions multimedia content that the operator considers to be of general interest or that it wants to promote and therefore wants to place in the first positions of the direct accesses or shortcuts.

In particular, the generation of the second multimedia content guide 200, or the related to strip, is built using recommendation algorithms based on artificial intelligence and machine learning. The use of these algorithms in some exemplary embodiments allows similarities to be found between the event being broadcast and multimedia content from the catalogue (which may belong to the video-on-demand catalogue, broadcast multimedia content catalogue or linear multimedia content being broadcast catalogue).

The unified catalogue of multimedia content makes it possible to characterise linear and video-on-demand multimedia content under the same metadata paradigm. Due to this, it is possible to relate multimedia contents taking the linear event as a pivot. The similarity between multimedia content is based on weighted metadata sharing, focussing on genres, categories, actors, directors, micro-genres or tags. Thus, the more features two multimedia contents share, the more likely it is that they will be related.

In an exemplary embodiment, a correction factor based on a multimedia content consumption profile is also applied to calculate the order in which similar multimedia content is presented. Thus, for example, if a movie of a well-known actor is being broadcast at a particular moment, if there is a comedy movie with the same actor and a drama movie with the same actor in the multimedia catalogue, and the user's consumption profile indicates a greater interest in the drama multimedia content, the latter will likely be the genre appearing first.

The second multimedia content guide 200 can be configured per linear channel, such that decisions can be made depending on the type of channel and/or the quality of the metadata provided, which will be key to provide good quality in these recommendations. In this way, various decisions can be made at the linear channel level on the platform/system:
- To enable or not to enable the case (the second multimedia content guide 200 would not be displayed).
- Presenting multimedia content belonging only to the channel provider (in the event that it is necessary to restrict the recommendations to the channel's own multimedia content due to rights).
- Presenting only on-demand multimedia content, only Catchup multimedia content, only TV multimedia content being broadcast, or combinations of all of them.
- Promoting multimedia content editorially.
- Presenting the most viewed multimedia content of the service or multimedia content of interest (in the case of an infomercial channel where it does not make sense to search for similar multimedia content).

The evolution of the second multimedia content guide 200 goes hand in hand with the evolution of the algorithms determining the multimedia content to be returned in each case. One course of action is to understand the user's mode of consumption, understanding what the user wants in each case. For example, if a user usually consumes the TV service from 10 to 11 p.m. and starts browsing the first multimedia content guide 100 at 10:30 p.m. looking for something to watch, he/she should be recommended short multimedia content that can be viewed in the next half hour, as opposed to the case in which he/she performs the same action after lunch on a Saturday, in which case he/she should be offered a movie, for example.

Another evolution, taking into account the new ecosystem in which the STB is considered the centre of home entertainment and other entertainment options such as games or music are included, is that the related multimedia content transcends the video context to open up to these other entertainment dimensions.

In other exemplary embodiments of the present invention, automatic tuning may be performed for the first multimedia content guide 100. When browsing the collection of the first multimedia guide 100, the metadata of the headend, the background broadcast, the player and the second multimedia guide 200 will be updated with each interaction. Likewise, it is possible to perform a tuning by pressing the OK key, where only when said OK key is pressed, the background broadcast, the player, the headend metadata and the second multimedia content guide 200 will be modified.

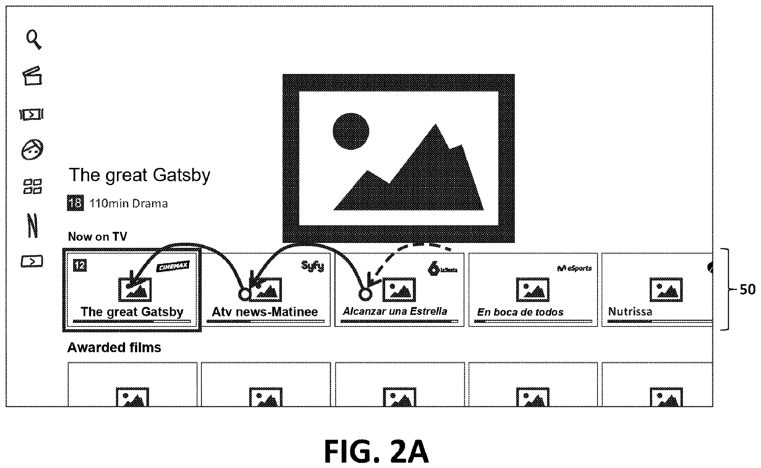

With reference to Figs. 2A - 2G, they illustrate an example page diagram or *wireframe* of the flow occurring in the multimedia interface 10 between the different multimedia content guides 100, 200. Figure 2A displays the Home with focus on a first multimedia content. In this case, the multimedia content guide in the Home 50 (which may be considered as an initial or preliminary guide, prior to the generation of the first and second guides 100, 200) may include a set of blocks with access to the last channel viewed, to the favourite and/or most viewed channels and optionally also personal recommendations of the user. For example, by pressing the direction arrows [<] [>] this multimedia content strip 50 scrolls keeping the focus fixed, scrolling the menu and updating broadcast and metadata.

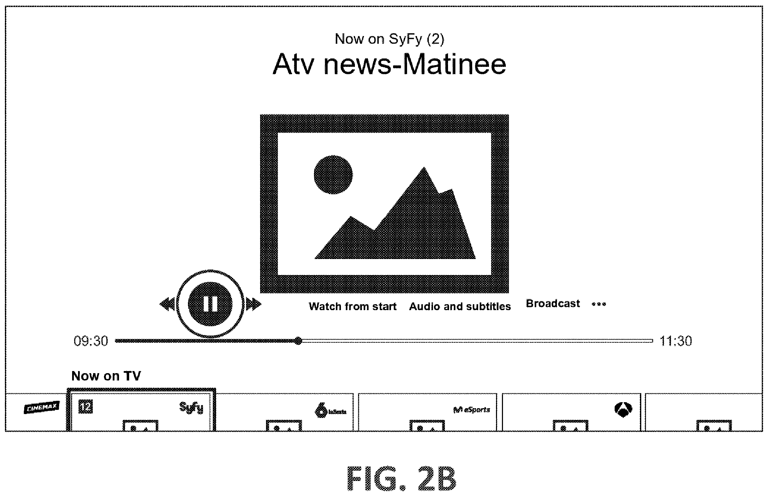

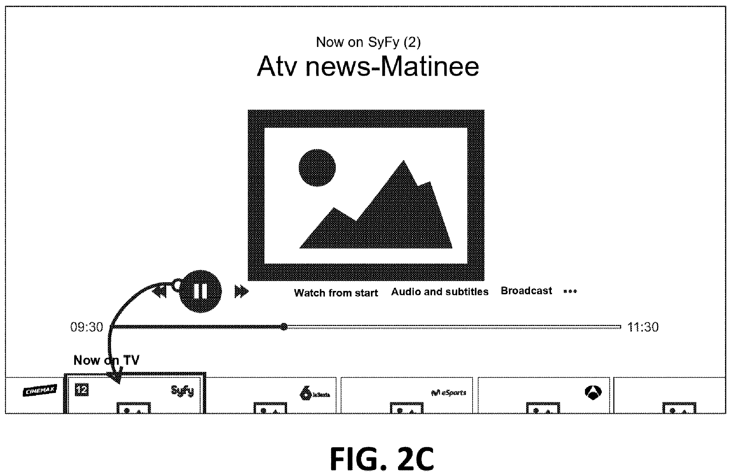

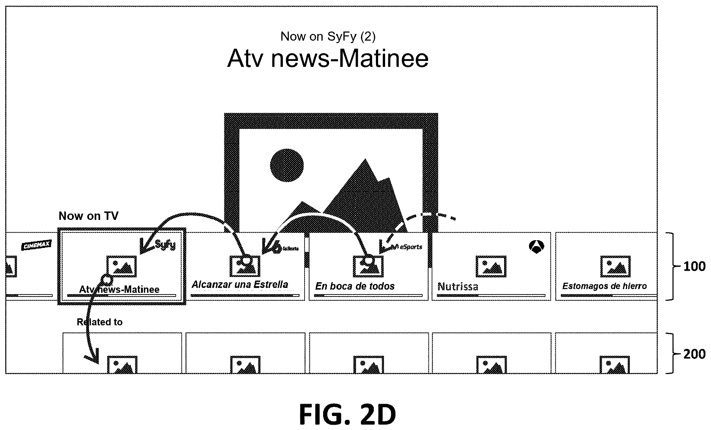

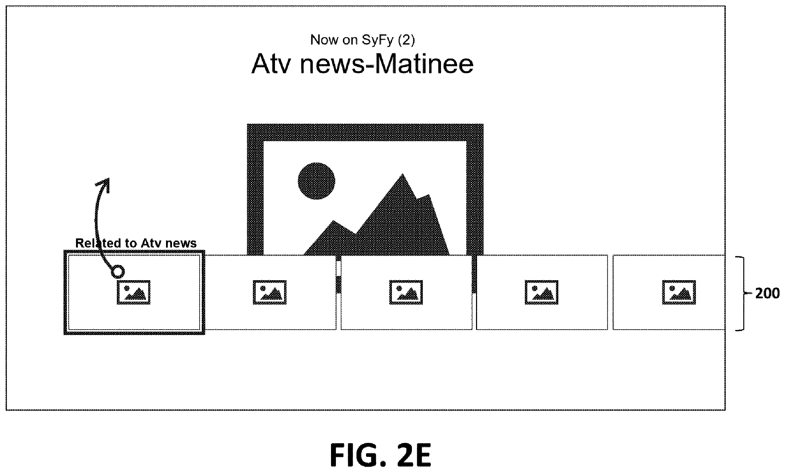

By pressing *[OK] the consumption environment, the player, of this live now content is accessed.* Figure 2B shows player-live channel switching (Mini-guide) of the second multimedia content being broadcast. *When landing in the consumption environment, or player, of a live now content, the focus appears on the main button of the player [Pause*/*Play].* Figure 2C shows live-*player* channel switching (Mini-guide) of the second content being broadcast. When using the direction arrow [v] the first multimedia content guide 100 scrolls to the main position and the focus is activated. The *player* disappears and the second multimedia content guide (collection related to the content being broadcast) 200 is partially viewed. Figure 2D displays the channel switching (Mini-Guide) in the first multimedia content guide 100 with background tuned content. By pressing the direction arrows [<] [>] the first guide scrolls keeping the focus fixed, scrolling the menu and updating broadcast and metadata. By using the direction arrow [v] the second multimedia guide 200 scrolls to the position of the first multimedia guide and the first multimedia guide disappears. Figure 2E shows the channel switching (Mini-guide) of the second multimedia content guide 200 with tuned content in the background. By using the direction arrow [^] the second multimedia content guide 200 scrolls to a partial view and the collection of the first multimedia content guide or "Now on TV" strip 100 resumes position.

In another example, if from Home (see Fig. 2A) CH+ or CH+ is pressed or any numeric key is entered dial entry is activated. Subsequently, the tuned channel (CH+ or CH-) next to the one that was tuned at the Home background, or the channel of the dial entered, is accessed. The focus is on the *player,* and the partial view of the first multimedia content guide 100 will be placed on the tuned channel. The movement to the second multimedia content guide 200 works with the crosshead and OK keys.

Although exemplary embodiments of the present invention have been described in the present document with reference to various specific embodiments, it will be obvious to the person skilled in the art to carry out the invention with modifications. All of these modifications are considered to be within the spirit and scope of the claims. Likewise, the claims are intended to cover all generic and specific features of the described exemplary embodiments and all statements of the scope of protection which, as a matter of language, could be said to lie therebetween.

The scope of the present invention is defined in the attached claims.

## Claims

1. A method for the generation of lists of personalised multimedia content at a multimedia interface, the method comprising:
the generation, by means of a processor, of a first multimedia content guide including a plurality of blocks with multimedia content being broadcast at a particular time, where the plurality of blocks are distinguished by dial and are arranged according to the preference of a user, where said preference has been actively selected by the user and/or refers to a viewing pattern of the multimedia content most viewed by the user during a pre-set time;
the generation, by means of a processor, of a second multimedia content guide including a plurality of blocks with multimedia contents related to a multimedia content broadcast at said particular time via the multimedia interface;
displaying at the multimedia interface, by means of a processor, the first and second multimedia content guides generated.

2. The method according to claim 1, where the second guide is generated using one or more artificial intelligence and/or machine learning algorithms.

3. The method according to any one of the preceding claims, comprising calculating a degree of similarity between the multimedia content broadcast at said particular time and a set of multimedia contents stored in a database based on a weighted sharing of metadata of the multimedia content.

4. The method according to claim 3, further comprising calculating a correction factor based on a consumption profile of the multimedia content and including the blocks in the second guide arranged from the highest to the lowest correction factor.

5. The method according to claim 1, where the pre-set time is at least 5 days.

6. The method according to claim 1 or 5, where the multimedia contents of the first guide are displayed arranged from highest to lowest viewing.

7. The method according to claim 1, where said viewing pattern takes into account a time of day and/or the days of the week in which the user views the multimedia content.

8. The method according to claim 1 or 7, further comprising:
determining, by means of a recommendation engine, that the user is viewing a particular multimedia content based on metadata associated to said particular multimedia content; and
displaying in a first block of the first multimedia content guide said particular multimedia content.

9. The method according to any one of the preceding claims, comprising displaying the first multimedia content guide above the second multimedia content guide.

10. The method according to any one of the preceding claims, where the number of multimedia contents included in each guide is configurable.

11. A system for the generation of lists of personalised multimedia content at a multimedia interface, comprising:
a computing device with one or more processors configured to:
generating a first multimedia content guide (100) comprising a plurality of blocks (101A...101E) with multimedia content being broadcast at a particular time, where the plurality of blocks (101A...101E) are distinguished by dial and are arranged according to the preference of a user, where said preference has been actively selected by the user and/or refers to a viewing pattern of the multimedia content most viewed by the user during a pre-set time; and
generating a second multimedia content guide (200) comprising a plurality of blocks (201A...201E) with multimedia contents related to a multimedia content being broadcast at said time via the multimedia interface (10);
the multimedia interface (10) is configured to display the first (100) and second (200) multimedia content guides generated.

12. A computer programme product including code instructions which, when executed in a computing device, run a method according to claims 1 to 10.
